# EUROPÄISCHE PATENTSCHRIFT

(11) **EP 1 678 032 B1**
(45) Veröffentlichungstag und Bekanntmachung des Hinweises auf die Patenterteilung: **18.04.2007**
(21) Anmeldenummer: 04765350.6
(22) Anmeldetag: 13.09.2004
(51) Int. Cl.: B64D 1/22, B63C 9/00, A62B 33/00

(54) **VERFAHREN UND SYSTEM ZUR BERGUNG VON PERSONEN UND/ODER GEGENSTÄNDEN**
METHOD AND SYSTEM FOR SAVING PEOPLE AND/OR OBJECTS
PROCEDE ET SYSTEME DE SAUVETAGE DE PERSONNES ET/OU D'OBJETS

(30) Priorität: 12.09.2003 DE 10343337
(43) Veröffentlichungstag der Anmeldung: 12.07.2006
(73) Patentinhaber: Fraunhofer-Gesellschaft zur Förderung der angewandten Forschung e.V., 80686 München (DE); Textilforschungsinstitut Thüringer-Vogtland e.V., 07973 Greiz (DE); Philipp, Edmund, 10318 Berlin (DE)
(72) Erfinder: PHILIPP, Edmund, 10318 Berlin (DE)
(74) Vertreter: Hengelhaupt, Jürgen
(86) Internationale Anmeldenummer: PCT/EP2004/010457
(87) Internationale Veröffentlichungsnummer: WO 2005/025984

(56) Entgegenhaltungen:
- US-A- 3 336 005
- US-A- 4 113 207
- US-A- 5 020 742
- US-A- 6 011 510
- US-A- 6 121 922
- US-B1- 6 195 039
- US-B1- 6 222 484
- US-B1- 6 414 629

## Beschreibung

Die Erfindung betrifft ein Verfahren und ein System zur Bergung von Personen und/oder Gegenständen mit den in den Oberbegriffen der Ansprüche 1 und 7 genannten Merkmalen.

Es ist bekannt, dass unterschiedlichste Personen oder Personengruppen wie beispielsweise Seeleute oder Bergsteiger häufig Gefahren beispielsweise aufgrund ungünstiger Wetterbedingungen ausgesetzt sind, wodurch sie in einen Notstand geraten können, in welchem sie fremde Hilfe benötigen. Um diese Personen aus der jeweiligen Notsituation zu befreien, ist häufig eine Bergung der Personen erforderlich. Ebenso ist es bekannt, Gegenstände wie beispielsweise havarierte Schiffe zu bergen.

Die Suche und Bergung von havarierten Personen und/oder Gegenständen ist auch unter dem Begriff "Search and Rescue" (SAR) bekannt. Dabei ist es vorgesehen, dass im Falle einer Havarie oder eines Notfalls, welcher eine Bergung erfordert, ein Absetzen von Notrufsignalen durch Funk oder ähnliche Mittel, wenn möglich mit einer Positionsangabe der Havarie und/oder des Verlustortes erfolgt, welche von entsprechenden Empfängern, wie Satelliten, Funkstationen oder mit Funk ausgestatteten Fahrzeugen, empfangen und an Leitstellen nationaler oder internationaler SAR-Dienste weitergeleitet werden. Dabei kann das Absetzen von Notrufsignalen sowohl manuell als auch automatisch, beispielsweise durch Aktivierung von Notrufeinrichtungen mittels geeigneter Sensoren, erfolgen. Von den Leitstellen nationaler bzw. internationaler SAR-Dienste wird das empfangene Notrufsignal zu den der Unglücksstelle (Zielpunkt oder Zielgebiet) zeitlich am nächsten gelegenen, einsatzbereiten Rettungsdiensten oder Rettungsstellen übermittelt. Ein häufiger Fall für SAR-Einsätze ist die Bergung verunglückter Personen oder Gegenstände auf See, welche in der Regel mittels Wasser- oder Luftfahrzeuge durchgeführt wird. Für die vorbeschriebenen Rettungseinsätze kommen Seenotrettungskreuzer und -boote sowie speziell ausgestattete Rettungshubschrauber ziviler und militärischer Dienste zum Einsatz.

Durch die entsprechenden Fahrzeuge werden die mit der Rettung beauftragten Personen nahe an das zu bergende/rettende Ziel (Zielpunkt oder Zielgebiet) herangebracht, um eine Bergung durch Befestigung der zu rettenden Person oder des zu rettenden Gegenstandes (Zielobjekt) in oder an einer Befestigungs- oder Sicherungsvorrichtung (Bergegeschirr), einem Zugelement sowie Einhol- oder Bergungsvorrichtungen wie zum Beispiel Winden, welche vorzugsweise an Wasserfahrzeugen oder Luftfahrzeugen montiert sind, zu ermöglichen. Sobald das Zielobjekt an dem Bergegeschirr, beispielsweise einem Tragegurt oder einer Trageweste befestigt ist, kann es beispielsweise an Bord des Luft- oder Wasserfahrzeuges geholt und damit in Sicherheit gebracht werden.

Bei dem oben beschriebenen Verfahren wird es aufgrund des Zustandes der zu bergenden Person oder des zu bergenden Gegenstandes häufig notwendig, das Anlegen bzw. Befestigen des Bergegeschirrs an der zu bergenden Person bzw. dem zu bergenden Gegenstand im Wasser, z. B. durch Rettungstaucher, vorzunehmen. Diese Rettungstaucher sind regelmäßig an einem Rettungsseil befestigt/eingehakt und springen zur Bergung ins Wasser oder werden mit dem Rettungsseil per Winde abgelassen.

Insbesondere bei niedrigen Wassertemperaturen ist dies für den Rettungstaucher ein sehr strapaziöser Vorgang, der nur eine begrenzte Anzahl von Wiederholungen erlaubt.

Nachteilig ist es am vorbeschriebenen Verfahren insbesondere, dass bei einer Vielzahl zu bergender Personen, beispielsweise einer auf See havarierten Personengruppe, der vorbeschriebene Bergungsvorgang entsprechend der Anzahl der zu bergenden Personen nacheinander wiederholt werden muss, da sich unter schlechten Wetterbedingungen der Abstand zwischen den einzelnen havarierten Personen oder Gegenständen vergrößert.

Die Suche nach den einzelnen Objekten/Personen gestaltet sich nach dem derzeitigen Stand der Technik bergungsobjektseitig im Rahmen der eingesetzten Rettungsmittel als sehr schwierig, da die derzeit eingesetzten Signalmittel, meist optischer Art, nur für begrenzte Zeit aktivierbar sind und meist nur im relativen Nahbereich von einem Luftfahrzeug (Wasserfahrzeug oder Hubschrauber) aus zu orten sind, d. h. die Rettungskräfte müssen bereits den Nahbereich erreicht haben.

Eine Sichtortung vom Hubschrauber aus ist in der Regel selbst im Nahbereich um den Zielpunkt herum nur bei guten Wetterbedingungen mit einer Erfolgsquote von ca. 75 % behaftet, da sich die Chance auf Sichtortung ab einer Wellenhöhe von ca. 0,5 m erheblich verschlechtert, selbst wenn sich der Hubschrauber schon direkt über dem Zielpunkt befindet. Insofern stellen die Suchzeiten vor Ort (Nahbereich) zeitlich gesehen eines der Hauptprobleme bei der Bergung havarierter Personen/Gegenstände dar.

Aufgrund der vorgenannten Probleme ist das Verfahren zur Bergung mehrerer Personen, welche sich in einem Zielgebiet von nicht zu vernachlässigender Ausdehnung befinden, keine geeignete Lösung, um eine schnelle Rettung und Bergung möglichst vieler Personen gewährleisten zu können.

Der zeitliche Aspekt der Bergung ist jedoch in vielen Fällen entscheidend, denn bei rauem Seegang besteht bei einem langen Verweilen von Personen im Salzwasser auch bei Einsatz von Rettungsmitteln, wie Rettungsringen, Schwimmwesten oder Überlebensanzügen, eine erhebliche Gefahr der Schädigung der Lunge durch Einatmen der salzigen Gischt, welche ein inneres Volllaufen der Lunge mit körpereigener Flüssigkeit (Wasser) bewirkt und hierdurch eine beträchtliche Gefahr für Gesundheit und Leben von havarierten Personen darstellt. Ein weiterer Aspekt besteht in der Gefahr des Unterkühlens infolge von zu langem Verbleib in kühlem Wasser.

Zwar kann eine Bergung mehrerer Personen in einem nicht unerheblich großen Zielgebiet durch den Einsatz von Seenotrettungsschiffen im Gegensatz zu Hubschraubern verkürzt werden, jedoch ist die Verfügbarkeit solcher Seenotrettungsschiffe aufgrund ihrer Fortbewegungsgeschwindigkeit und dem damit einhergehenden geringen Aktionsradius begrenzt. So würden Seenotrettungsschiffe in vielen Mann-über-Bord-Fällen wesentlich zu spät im Zielgebiet eintreffen. Daher besteht für eine große Anzahl von SAR-Einsätzen die Notwendigkeit der Verwendung von Luftfahrzeugen, insbesondere von Rettungshubschraubern, welche aufgrund ihrer höheren Geschwindigkeit gegenüber Schiffen innerhalb geringer Zeit auch weit entfernte Zielgebiete erreichen können. Jedoch ist auch hier ihre Einsatzfähigkeit aufgrund ihres relativ hohen Treibstoffverbrauches auf wenige Stunden beschränkt. Von dieser Zeit bleibt als für die eigentliche Bergung zur Verfügung stehende Zeit durch den Abzug der An- und Rückflugzeiten sowie der Dauer zum Auffinden der havarierten Personen/Gegenstände und einer Sicherheitsreserve je nach Anflugweite eine entsprechend geringere Zeit übrig. Die Einsatzdauer von Hubschraubern kann insbesondere durch eine Zwischenbetankung auf Schiffen erhöht werden, welche jedoch nicht in allen Einsatzgebieten und zu allen Einsatzzeiten möglich ist.

Aufgrund des Vorgenannten ergibt es sich, dass zur Bergung von Personen und Gegenständen, insbesondere zur Bergung größerer Personengruppen ein einzelner Hubschrauber möglicherweise nicht ausreicht, da dieser den relativ zeitaufwendigen Vorgang des Bergens einer einzelnen Person durch Befestigung (der Person am Bergegeschirr) und Einholen der Person (bzw. des Bergegeschirrs) in entsprechender Anzahl der zu rettenden Personen wiederholen müsste. Dies ist bei größeren Personengruppen aufgrund der beschränkten Einsatzzeit des Hubschraubers in manchen Fällen jedoch nicht ausreichend möglich. Daher wäre es zu einer rechtzeitigen Rettung aller Personen notwendig, mehrere Hubschrauber zur Bergung zur Verfügung zu haben, was mit einem hohen logistischen Aufwand sowie einem erheblichen Kostenaufwand einherginge.

Zur Verkürzung der Bergungszeit ist es aus US 3,336,005 bekannt, eine zu bergende Person über ein Seil mit einem Ballon zu verbinden, wobei ein Luftfahrzeug, beispielsweise ein Flugzeug mit einem Aufnahmemechanismus für das Seil versehen ist. Der Aufnahmemechanismus weist zwei V-förmige Elemente, die an der Spitze des Flugzeugs angeordnet sind, auf. Befindet sich der Ballon nun im Luftraum über der zu bergenden Person, kann das Luftfahrzeug (ohne zu landen) das Seil aufnehmen und einholen, wodurch die zu bergende Person schnell geborgen werden kann. Nachteilhafterweise wird für eine solche Bergung ein entsprechend langes Zugelement (Seil) sowie ein für das Gewicht des Zugelements entsprechend dimensioniertes Auftriebselement benötigt, welches die zu bergende Person bei sich tragen muss. Bei der Dimensionierung des Zugelements ist zu berücksichtigen, dass dieses die Last der zu bergenden Person tragen können muss. Daher weisen Zugelement und Auftriebselement (welche Teil des Bergegeschirrs sind) ein relativ hohes Gewicht auf, wodurch der Einsatz stark begrenzt ist. Eine Integration eines solchen Bergegeschirrs in eine Schwimmweste oder in die Ausrüstung eines Bergsteigers sind deshalb kaum möglich. Ein weiterer Nachteil des Verfahrens nach US 3,336,005 besteht darin, dass sich die Bergungszeit für eine im Wasser befindliche, zu bergende Person bei schlechten Wetterbedingungen, insbesondere bei schlechter Sicht dadurch erhöhen kann, dass der Pilot des Luftfahrzeuges die zu bergende Person (aufgrund der schlechten Sichtverhältnisse) erst nach langer Zeit entdeckt oder dass eine Verbindung zwischen dem Zugelement (Seil) und dem V-förmigen Aufnahmemechanismus des Flugzeuges erst nach einer Vielzahl von Anflügen hergestellt werden kann.

Weiterhin problematisch am Verfahren nach US 3,336,005 ist es, dass durch den bei der Aufnahme des Seiles entstehenden Impuls (Ruck) mit einer extrem hohen Beschleunigung des Seiles und der daran befestigten Last oder Person zu rechnen ist, wodurch insbesondere biologische Grenzbelastungen überschritten werden können.

Weiterhin ist es aus US 6,195,039 B1 bekannt, im Bereich einer zu bergenden Person einen GPS Empfänger zum Empfang von Positionssignalen sowie einen RF transmitter vorzusehen, so dass die genaue Position der zu bergenden Person (welche sich aufgrund von Strömungsverhältnissen bis zum Eintreffen von Rettunskräften im Zielgebiet ändern kann) drahtlos an Rettungsmannschaften weiter gegeben werden kann. Hierdurch wird zwar ein schnelles Auffinden der zu bergenden Person/en sicher gestellt, jedoch benötigt der Bergungsvorgang (das Verbringen der zu rettenden Person/en an einen sicheren Ort) sehr viel Zeit. Vor allem ist die in US 6,195,039 B1 verwendete Rettungsinsel aufgrund ihres Gewichts in vielen Bereichen nicht einsetzbar. Weiterhin wird für das Aussenden der Positionssignale eine ausreichend dimensionierte Energiequelle (Batterie) benötigt, welche ebenfalls Gewicht und Platz erfordert.

Aus US 6,222,484 B1 ist zur Bergung von havarierten Personen ein Bergegeschirr bekannt, welches einen GPS Empfänger zum Empfang von Positionssignalen sowie einen RF transmitter zum Aussenden von Positionssignalen mit einer kleinen Batterie als Energiequelle vorsieht, wobei die Positionsdaten der havarierten Person in einem relativ geringen Radius ausgesendet werden. Über eine weitere Station, beispielsweise ein in der Nähe befindliches Schiff werden die Positionsdaten dann an weiter entlegene Rettungskräfte übermittelt. Nachteilhaft an dieser Lösung ist insbesondere die Notwendigkeit einer in der Nähe befindlichen Station zum Empfang der Positionsdaten, welche regelmäßig nicht gewährleistet ist.

Weiterhin ist aus US 3,336,005 ein Verfahren zur Bergung einer Person durch ein Flugzeug bekannt, bei dem vorab ein Seil mittels eines Ballons in den Luftraum verbracht und mittels einer entsprechenden Greif-Vorrichtung während des Flugs eine Verbindung zwischen Seil und Flugzeug hergestellt wird. Danach kann die am Seil befestigte Person zur Bergung vom Flugzeug nach oben gezogen werden. Nachteilig ist jedoch, dass ein Ballon derart dimensioniert werden muss, dass er gegebenenfalls über mehrere Stunden selbständig in der Luft bleibt, da insbesondere bei der Seenotrettung nicht eindeutig vorhergesagt werden kann, wann die Einsatzkräfte am Unfallort eintreffen. Aus diesem Grund wird das Gewicht des Ballons derart groß sein, dass dieser sich nicht in einfacher Weise in ein Bergegeschirr, beispielsweise ein Rettungsweste integrieren lässt.

Weiterhin offenbart US 6,011,510 ein Verfahren zur Rettung einer Person mittels eines Notsenders, wobei Positionsdaten von einem darin eingebauten GPS-Empfänger erst dann ausgesendet werden, wenn der Notsender ein Abfragesignal von einer Abfrageeinheit in der Bergungsvorrichtung erhält.

Es ist daher Aufgabe der vorliegenden Erfindung, ein Verfahren sowie ein System zur Bergung von Personen und/oder Gegenständen anzugeben, durch welche eine Bergung in geringerer Zeit als nach dem Stand der Technik realisiert werden kann und wobei die von der zu bergenden Person/dem zu bergenden Gegenstand notwendigerweise beigeführten Rettungsmittel (Leinen, Ballon) ein möglichst geringes Gewicht ausweisen. Dabei soll die Einsatzzeit von SAR Einsätzen insbesondere unter erschwerten Bedingungen wie schlechten Sichtverhältnissen oder hohem Wellengang deutlich reduziert werden.

Eine weitere Aufgabe der Erfindung besteht darin, dass diejenigen Komponenten des Systems, welche von den havarierten Personen mitgeführt werden müssen, ein möglichst geringes Gewicht sowie einen möglichst geringen Platzbedarf aufweisen. Eine weitere Aufgabe der Erfindung besteht darin, dass die Störanfälligkeit des Verfahrens möglichst gering gehalten werden kann.

Diese Aufgabe wird erfindungsgemäß gelöst durch die Merkmale im kennzeichnenden Teil des Anspruchs, 1 (Verfahrensanspruch) und des Anspruchs 7 (Systemanspruch) im Zusammenwirken mit den Merkmalen im Oberbegriff. Zweckmäßige Ausgestaltungen sind in den Unteransprüchen enthalten.

Ein besonderer Vorteil der Erfindung besteht darin, dass eine Bergung von Personen und/oder Gegenständen in sehr kurzer Zeit realisiert werden kann, wobei das Verfahren/ das System eine geringere Störanfälligkeit als die bekannten Verfahren/Systeme nach dem Stand der Technik aufweisen.

Dazu weist das erfindungsgemäße Verfahren zur Bergung von Personen und/oder Gegenständen an einem Zielpunkt oder innerhalb eines Zielgebietes folgenden Verfahrensschritte auf:
- Verbringen einer Bergungsvorrichtung an den Zielpunkt oder in das Zielgebiet, wobei zum Auffinden der zu bergenden Person und/oder des zu bergenden Gegenstandes Positionsdaten verwendet werden, welche durch eine bei der zu bergenden Person und/oder dem zu bergenden Gegenstand befindlichen Vorrichtung ausgesendet werden,
- Verbringen eines mit der zu bergenden Person und/oder dem zu bergenden Gegenstand verbundenen, längliches Zugelementes in den Luftraum über oder seitlich der zu bergenden Person und/oder des zu bergenden Gegenstandes,
- Herstellen einer Verbindung zwischen der Bergungsvorrichtung und dem Zugelement und im Luftraum und
- Einholen der zu bergenden Person und/oder des zu bergenden Gegenstandes,
wobei das Verbringen des Zugelementes in den Luftraum mittels drahtlos übertragener Signale ausgelöst wird.

Vorzugsweise wird das Aussenden der Positionsdaten mittels drahtlos übertragener Signale ausgelöst.

Hierdurch wird es möglich, das längliche Zugelement mittels des Auftriebselementes erst in dem Moment in den Luftraum über oder seitlich der zu bergenden Person zu befördern, in dem die Rettungskräfte (beispielsweise ein Hubschrauber mit einer entsprechenden Bergungsvorrichtung) bereits im Zielgebiet eingetroffen sind. Vorzugsweise wird das Verbringen des Zugelementes in den Luftraum durch Rettungskräfte aktiviert. Hierdurch kann das Auftriebselement (beispielsweise ein Ballon) geringer dimensioniert werden, weil es nur für eine relativ kurze Zeit einen entsprechenden Auftrieb für das Zugelement gewährleisten muss. Dadurch wird insbesondere vermieden, dass ein als Auftriebselement verwendeter Ballon nach einiger Zeit (beispielsweise aufgrund einer Beschädigung bei einem Sturm) wieder absinkt, so dass die Verbindung zwischen Zugelement und (am Hubschrauber befindlicher) Bergungsvorrichtung nicht im Luftraum erfolgen kann.

Ein weiterer Vorteil einer bevorzugten Ausführungsvariante des erfindungsgemäßen Verfahrens (in der das Aussenden der Positionsdaten mittels drahtlos übertragener Signale ausgelöst) besteht darin, dass eine Bestimmung der exakten Position der zu bergenden Person durch die Rettungskräfte erst nach deren Eintreffen im Zielgebiet erfolgt und dadurch der für das Aussenden der Positionssignale notwendige Energiespeicher (Batterie) geringer dimensioniert werden kann. Dies führt sowohl zu einer relevanten Gewichtsersparnis der verwendeten Komponenten als auch zu einer geringeren Störanfälligkeit des Verfahrens.

Von der ferngesteuerten Auslösung des Aussendens der Positionsdaten (mittels drahtlos übertragener Signale) unabhängig kann im Havariefalle ein Notrufsignal (mit Positionsdaten) ausgesendet werden. Ein solches Signal benötigt jedoch eine relativ hohe Sendeleistung (hoher Energiebedarf), da es eine hohe Reichweite haben muss. Da das Aussenden der Positionsdaten nach der bevorzugten Ausführungsvariante jedoch später, beispielsweise erst beim Eintreffen der Rettungskräfte im Zielgebiet erfolgt, wird lediglich eine geringe Reichweite des Signals erforderlich. So ist es beispielsweise möglich, einen einmaligen Notruf zu Beginn der Havarie, beispielsweise mittels Emergency Position Indication Radio Beacon (EPIRB) abzusenden. Dabei ist es nach dem Stand der Technik bekannt, Notrufsignale sowohl manuell als auch durch andere Mittel, beispielsweise durch Sensoren, zu aktivieren. Solche Sensoren können beispielsweise bei der Registrierung eines Wassereinbruches an Bord eines Schiffes ein Notrufsignal aussenden. Aufgrund des Notrufsignals werden in entsprechenden Leitstellen Rettungsmannschaften benachrichtigt, welche sich möglichst nahe am Zielpunkt oder am Zielgebiet befinden. Dabei entscheidet die zeitliche Nähe, also die Möglichkeit eines möglichst umgehenden Eintreffens am Zielpunkt oder im Zielgebiet. Aufgrund der Abdrift (Strömungen und Thermik/Wind) befindet sich die zu bergende Person/der zu bergende Gegenstand zum Zeitpunkt des Eintreffens der Rettungskräfte regelmäßig nicht mehr an der ursprünglichen Position, von welcher der Notruf ausgesendet wurde. Nun kann erfindungsgemäß das Aussenden der Positionsdaten durch das Bergegeschirr (was beispielsweise in der Schwimmweste der zu bergenden Person integriert ist) aktiviert werden. Diese Aktivierung erfolgt durch drahtlos übertragbare Signale, beispielsweise durch ein entsprechendes, von den Rettungskräften ausgesendetes Aktivierungssignal. Erst jetzt beginnt das Bergegeschirr, Positionsdaten auszusenden. Vorteilhaft hieran ist, dass der zum Aussenden der Positionsdaten erforderliche Energiespeicher geringer dimensioniert werden kann, als wenn die Positionsdaten vom Beginn der Havarie dauerhaft ausgesendet würden. Erst hierdurch wird die Vermeidung großer Energiespeicher (Batterien) und damit die Integration eines entsprechenden Bergegeschirrs beispielsweise in eine Schwimmweste möglich. Weiterhin wird vermieden, dass sich ein vor dem Eintreffen der Rettungskräfte beanspruchter Energiespeicher vorzeitig entlädt und daher beim Eintreffen der Rettungskräfte keine Positionsdaten mehr aussendet.

In einer bevorzugten Ausführungsvariante befindet sich das im Bergegeschirr (z.B. Schwimmweste) der zu rettenden Person befindliche längliche Zugelement, bis die Rettungskräfte im Zielgebiet eintreffen, noch im deaktivierten Zustand, d.h. dass das längliche Zugelement noch nicht in den Luftraum über oder seitlich der zu bergenden Person/ des zu bergenden Gegenstandes verbracht worden ist. In einer besonders bevorzugten Ausführungsvariante befindet sich das längliche Zugelement im eingerollten Zustand im Bergegeschirr, das mit der zu bergenden Person oder dem zu bergenden Gegenstand verbunden ist.

Durch die Aktivierung des Aussendens von Positionsdaten durch die Rettungskräfte nach Eintreffen im Zielgebiet kann die zu bergende Person/ der zu bergende Gegenstand auch bei schlechten Bedingungen (schlechte Sicht, hohe Wellen, starker Wind) sehr schnell aufgefunden werden. Ist die genaue Position der zu bergenden Person/des zu bergenden Gegenstandes ermittelt, wird vorzugsweise das längliche Zugelement in den Luftraum über oder seitlich der zu bergenden Person und/oder des zu bergenden Gegenstandes verbracht. Dieses Verbringen wird ebenfalls durch die Rettungskräfte aktiviert. Diese Aktivierung erfolgt durch drahtlos über-tragbare Signale, beispielsweise durch ein entsprechendes, von den Rettungskräften ausgesendetes Aktivierungssignal (Funksignal).

Vorzugsweise wird gleichzeitig durch die Rettungskräfte eine Grundkinematik/Aufhängung am Rettungsfahrzeug (Hubschrauber) aktiviert. Hierdurch wird die im Rettungsfahrzeug befindliche Bergungsvorrichtung überprüft und ausgefahren. Die Bergungsvorrichtung dient der Aufnahme des länglichen Zugelements, welches sich im Bergegeschirr (Rettungsweste) der zu bergenden Person befindet. Dazu weist die Bergungsvorrichtung ein Robotbasisaggregat, eine Vertikalfördereinrichtung, eine Elektronik, Mittel zur Aktivierung, Mittel zum Ausfahren der Auslegerkinematik mit Fixierungs- und Horizontalförderung, Mittel zur Übergabe eines Befestigungselements an das längliche Zugelement zwischen Horizontalförderungsaggregat und Vertikalfördereinrichtung auf.
Danach wird das Luftfahrzeug (z.B. Hubschraubers mit Horizontalförderungseinheit) vorzugsweise mit einem Zielerfassungssystem genau positioniert. Dies erfolgt durch eine geschwindigkeitsoptimierte Annäherung z.B. des Hubschraubers und der Horizontalförderungs-/Fixierungseinheit an das längliche Zugelement mit daran befindlichem Auftriebselement (Pilotleine/Ballon) im zulässigen Bereich um und unterhalb des Hubschraubers.

Danach erfolgt vorzugsweise das Herstellen einer Verbindung zwischen der Fixierungs- und Vertikalfördereinrichtung der Bergungsvorrichtung und dem Zugelement(Pilotleine). Danach erfolgen vorzugsweise
- Förderung der Pilotleine zur Übergabestation,
- Sicherung des Auftriebselementes zum Ausschluß einer Gefährdung des Hubschraubers
- Nachziehen des Verbindungselementes (zwischen Pilot-u.Lastseil), wobei das längliche Zugelement des Bergegeschirrs ein mit dem Auftriebselement verbundenes Pilotseil, ein mit dem Pilotseil verbundenes Verbindungselement zur Verbindung mit der Bergungsvorrichtung und ein mit dem Verbindungselement verbundenes Lastseil aufweist, wobei das Pilotseil ein geringeres Gewicht (in Bezug auf seine Länge) als das Lastseil aufweist, sowie
- Verbindung des zwischen Verbindungselement des Bergegeschirrs und Einholvorrichtung (Förderungsaggregate) der Bergungsvorrichtung.

Als Bergungsfahrzeug wird vorzugsweise ein Luftfahrzeug, besonders bevorzugt ein Hubschrauber verwendet, da dieser besonders schnell zum Zielgebiet gelangen und sich besonders nah an die zu bergenden Personen/Gegenstände positionieren kann. In einer besonders bevorzugten Ausführungsvariante der Erfindung wird das Verbringen der Bergungsvorrichtung an den Zielpunkt oder in das Zielgebiet mit Hilfe von drahtlos optoelektronisch und/oder durch Funk vernetzten intelligenten multifunktionalen Mikrosystemtechniken fern-ausgelöst, gesteuert und überwacht.

Das erfindungsgemäße System zur Bergung von Personen und/oder Gegenständen an einem Zielpunkt oder innerhalb eines Zielgebietes weist ein Bergegeschirr und eine Bergungsvorrichtung für das Bergegeschirr auf, wobei das mit der zu bergenden Person und/oder dem zu bergenden Gegenstand verbundene oder verbindbare Bergegeschirr ein längliches Zugelement, ein Auftriebselement, Mittel zum Auslösen des Auftriebselements, Mittel zum Bestimmen von Positionsdaten und Mittel zum Aussenden von Positionsdaten aufweist und die Bergungsvorrichtung mit dem Bergegeschirr verbunden oder verbindbar ist und Mittel zum Einholen des Zugelementes des Bergegeschirrs aufweist, wobei das Mittel zum Auslösen des Auftriebselements durch drahtlos übertragbare Signale aktivierbar ist.

Vorzugsweise ist das Mittel zum Aussenden von Positionsdaten durch drahtlos übertragbare Signale aktivierbar.

Dadurch, dass das Mittel zum Auslösen des Auftriebselements durch drahtlos übertragbare Signale aktivierbar ist, kann das Auftriebselement, beispielsweise ein Ballon erst nach dem Eintreffen der Rettungskräfte im Zielgebiet in den Luftraum verbracht werden. Durch die hierdurch erzielte Verkürzung der erforderlichen Einsatz- bzw. Betriebszeit und die vorgesehene einmalige Verwendung stellt die Konstruktion des Auftriebselementes hinsichtlich der Wahl der Auftriebsmittel und der Materialauswahl geringere Anforderungen als die bekannten Auftriebselemente (Ballonsysteme) für die Seenotrettung. Die verwendeten Materialien und Bauteile weisen vorteilhafter weise aufgrund der geringeren Anforderungen an deren Betriebsdauer geringere Anforderungen hinsichtlich temporärer Betriebsfestigkeit auf, was zu einem erheblichen Kostenvorteil und einer Gewichtseinsparung führt.

Vorzugsweise weist das Bergegeschirr ein erstes längliches Zugelement (Lastseil) auf, welches mit einem zweiten länglichen Zugelement (Pilotseil) verbunden ist, wobei das zweite längliche Zugelement mit dem Auftriebselement verbunden ist und ein geringeres Gewicht als das erste längliche Zugelement aufweist.

Dabei ist das zweite längliche Zugelement bezüglich seiner Lastfähigkeit/ Zugbelastbarkeit derart gering dimensioniert, dass es nicht die Last der zu bergenden Person oder des zu bergenden Gegenstandes tragen können muss. Hierdurch wird es ermöglicht, dass das Auftriebselement (Ballon) in eine relativ große Höhe aufsteigen kann, wobei es vermieden werden kann, dass das Auftriebselement über ein längliches Zugelement mit großem Gewicht in die Luft heben muss, welches aufgrund seiner Lastfähigkeit bezüglich der zu bergenden Person oder des zu bergenden Gegenstandes (in Bezug auf Masse (Volumen) und Gewicht) relativ groß dimensioniert werden muss. Durch die zweiteilige Ausgestaltung des Zugelements (leichtes Pilotseil und schweres Lastseil) braucht nur das leichte Pilotseil in die Luft gehoben zu werden, wobei das Laststeil später (sobald die Verbindung mit dem Hubschrauber hergestellt ist) nachgezogen wird.

Das Bergegeschirr umfasst diejenigen Komponenten des Systems, welche die zu bergende Person von Anfang an mit sich führt. Die Bergungsvorrichtung hingegen wird erst durch die Rettungskräfte ins Zielgebiet verbracht, um im Wechselspiel mit dem Bergegeschirr die Bergung zu ermöglichen.

Vorzugsweise ist sowohl das Bergegeschirr, das Auftriebselement als auch die Bergungsvorrichtung mit Mitteln (vorzugsweise der Mikrosystemtechnik) ausgestattet, die den drahtlosen Austausch und die Verarbeitung von Identifikations- und Statusinformationen der zu bergenden Personen/der zu bergenden Gegenstände sowie der Rettungskräfte, die bidirektionale Kommunikation zwischen den Einzelsystemen/-komponenten untereinander und den, beispielsweise, Bordsystemen eines eingesetzten Hubschraubers und seiner Besatzung/Piloten gewährleistet.

Die Mikrosystemtechnik ist mit den erforderlichen rechnergestützten Bordsystemen vernetzt und das Kommando des Hubschraubers hält die Kontrolle und Entscheidungsfreiheit hinsichtlich der Aktivierung einzelner Prozessschritte (Auslösen des Aussendens von Daten, des Auftriebselementes).

Das Auftriebselement ist vorzugsweise mit geeigneter Steuerungs- und Regeltechnik zum Regeln der von Windgeschwindigkeit und Thermik auftretenden, auf das Auftriebselement einwirkenden Zugkräfte, ausgestattet.

Diese zeichnet sich beispielsweise durch Eigenschaften aus, die eine geregelte Veränderung der Form des Auftriebselementes und/oder eine Veränderung der Luftdurchlassgeometrie während des Einsatzes im Luftraum ermöglicht. Diese ermöglichen eine Regelung des Strömungsverhaltens des Auftriebselementes während seines Aufenthaltes im Luftraum und erlauben eine Eingrenzung der gewollten/ungewollten auf das Auftriebselement aufgrund der Thermik einwirkenden Zugkräfte als auch die Beendigung der Auftriebskräfte selbst. Dazu ist das Auftriebselement vorzugsweise an die anderen Komponenten (über vernetzte Mikrosystemtechnik) angebunden.

Das durch die Bauart des Pilotseiles und das geringe Eigengewicht des Auftriebselementes bedingte reduzierte Volumen der Gasauftriebskammer/des Ballons reduziert die benötigte Menge an benötigtem Auftriebsmittel (beispielsweise Heliumgas) erheblich und dadurch das Gewicht des dieses bevorratenden Behälters.

Vorzugsweise weist das Mittel zum Auslösen des Auftriebselements einen Empfänger für drahtlos übertragbare Signale, eine Signalverarbeitung und einen Auslöser für das Auftriebselement auf, wobei der Auslöser mit dem Auftriebselement verbunden ist.

Dadurch, dass Mittel zum Aussenden von Positionsdaten durch drahtlos übertragbare Signale aktivierbar ist, können Positionsdaten erst nach dem Eintreffen der Rettungskräfte im Zielgebiet ausgesendet werden. Hierdurch kann der Energiespeicher für das Mittel zum Aussenden von Positionsdaten geringer dimensioniert werden, wodurch eine Gewichtsersparnis erzielt werden kann. Insbesondere das Gewicht des Bergegeschirrs, welches von der havarierten Person mitgeführt werden muss, beispielsweise in der Schwimmweste, reduziert die Einsatzmöglichkeiten erheblich. So sind insbesondere Sportler, wie beispielsweise Segler oder Bergsteiger auf ein geringes Gewicht des Bergegeschirrs, also auch auf ein geringes Gewicht des Energiespeichers für das Mittel zum Aussenden von Positionsdaten angewiesen. Vorzugsweise weist das Mittel zum Aussenden von Positionsdaten einen Empfänger für drahtlos übertragbare Signale, eine Signalverarbeitung sowie einen Funksender und/oder einen Laser auf.

In einer weiteren bevorzugten Ausführungsvariante der Erfindung weist das Bergegeschirr ein zwischen erstem Zugelement und zweitem Zugelement angeordnetes Verbindungselement zur Verbindung mit der Bergungsvorrichtung auf und die Bergungsvorrichtung weist mindestens ein, vorzugsweise jedoch eine Vielzahl von Verbindungselementen zur Verbindung mit dem Bergegeschirr auf. Das mindestens eine Verbindungselement befindet sich in dieser Ausführungsvariante zwischen den beiden Zugelementen. Das zweite längliche Zugelement (vorzugsweise ein Pilotseil) muss derart beschaffen sein, dass es von der Bergungsvorrichtung (beispielsweise einem Greifmechanismus) fixiert werden kann, um die Bergungsvorrichtung über die Zugelemente mit dem Bergegeschirr zu verbinden.

Das Bergegeschirr ist vorzugsweise in einer Schwimmweste, einem Überlebensanzug, einer Rettungsinsel, einem Rettungsboot, einer Bergsteigerausrüstung und/oder einer Skifahrernotfallausrüstung integriert, so dass gefährdete Personen, wie Seeleute oder Bergsteiger oder Skifahrer das Bergegeschirr stets bei sich tragen können. Dabei ist das erste längliche Zugelement, welches vorzugsweise ein Seil ist, derart zu dimensionieren, dass es die gesamte Last der zu bergenden Person oder des zu bergenden Gegenstandes aufnehmen kann.

In einer besonders bevorzugten Ausführungsvariante weist das Bergegeschirr eine Aufrollvorrichtung auf, in welcher das mindestens eine längliche Zugelement aufgerollt ist und daher besonders platzsparend angeordnet werden kann.

Das Auftriebselement ein vorzugsweise ein Ballon, ein Drachen, ein Zugschirm, ein Kite-Schirm oder ein Gleitschirm ist. Das Mittel zum Auslösen des Auftriebselements weist vorzugsweise ein Mittel zum Befüllen des Ballons auf und ist vorzugsweise ein mit Helium gefüllter Druckbehälter oder ein Kaltgas-Generator. Der Ballon ist derart dimensioniert, dass er mit Helium gefüllt einen derart starken Auftrieb besitzt, um das in der Aufrollvorrichtung befindliche längliche Zugelement (das zweite längliche Zugelement) mit dem daran befindlichen Verbindungselement, also beispielsweise ein Pilotseil mit einem verdickten Endstück, entgegen der Schwerkraft emporzuheben. Dazu sind das längliche Zugelement mit dem daran befindlichen Verbindungselement durch Materialien geringen Gewichts ausgebildet.

Vorzugsweise ist der Ballon ebenfalls aus Materialien geringen Gewichts ausgebildet. Dadurch wird es erreicht, dass das zum Auftrieb notwendige Volumen an Heliumgas so gering wie möglich gehalten wird, wodurch der mit Helium gefüllte Druckbehälter oder Kaltgas-Generator platz- und gewichtssparend ausgebildet werden kann, was zu einer guten Integrierbarkeit von Ballon, Druckbehälter/Kaltgas-Generator, Zugelement und Verbindungselement in einer Schwimmweste, einem Überlebensanzug, einer Rettungsinsel, einem Rettungsboot, einer Bergsteigerausrüstung und/oder einer Skifahrernotfallausrüstung führt.

Sobald Rettungskräfte (beispielsweise ein Rettungshubschrauber) im Zielgebiet eintreffen, kann zwischen dem Bergegeschirr und den Rettungskräften eine bidirektionale Kommunikation stattfinden. Die Rettungskräfte einerseits können das Aussenden von Positionsdaten aktivieren, so dass das Bergegeschirr (welches über ein Mittel zur Bestimmung der eigenen Position, beispielsweise GPS oder Gallileo verfügt) drahtlos Positionsdaten an die Rettungskräfte sendet. Hierdurch wird trotz eines gering dimensionierbaren Energiespeichers für das Mittel zum Aussenden von Positionsdaten ein schnelles Auffinden der zu bergenden Person gewährleistet. Weiterhin können die Rettungskräfte das Mittel zum Auslösen des Auftriebselements aktivieren, vorzugsweise nach erfolgtem Sichtkontakt zur zu bergenden Person.

Voraussetzung ist, dass das Bergegeschirr bereits ordnungsgemäß an der zu bergenden Person oder dem zu bergenden Gegenstand befestigt ist. Dazu ist es vorgesehen, dass das erfindungsgemäße Bergegeschirr in Schwimmwesten oder Rettungsanzügen integriert ist, welche gefährdete Personen stets bei sich tragen. Die Aktivierung des Auftriebselementes (beispielsweise die Befüllung des Ballons) kann alternativ auch manuell, beispielsweise durch die zu bergende Person selbst erfolgen.

Durch die Aktivierung des Auftriebselements (Befüllung des Ballons mit einem Gas, welches leichter als Luft ist) steigt das Auftriebselement nach oben. Während des Aufsteigens Auftriebselements zieht dieses das eine Ende eines länglichen Zugelementes, beispielsweise eines Seiles, mit nach oben. Durch den nach oben steigenden Ballon wird auch bei relativ schlechter Sicht das Auffinden der zu bergenden Person und/oder des zu bergenden Gegenstandes für die Rettungskräfte im Nahbereich deutlich erleichtert. Dabei ist es in einer bevorzugten Ausführungsvariante vorgesehen, dass mit Aktivierung des Mittels zum Befüllen des Ballons gleichzeitig der Aufrollmechanismus im Bergegeschirr freigegeben wird, so dass das darin aufgerollte längliche Zugelement nun frei beweglich aus dem Bergegeschirr nach oben am Ballon hängend gezogen werden kann.

Alternativ ist es vorgesehen, dass das Auftriebselement mitsamt seiner Verpackung (und dem darin befindlichen Kaltgas-Generator in den Luftraum verbracht (z.B. geschossen) und mit Erreichen des Endes des Zugelementes die Aktivierung des Auftriebselements (Entblättern, Entfalten, Aufblasen eines Ballons/Schirms) gestartet wird.

In einer weiteren alternativen Ausführungsvariante wird als Auftriebselement ein Schirm (Gleit-/Fallschirm) verwendet, der in den Luftraum geschossen und bei Erreichen des Endes des Zugelementes (Seiles) aktiviert (herausgezogen) wird.

Um im Luftraum über der zu bergenden Person oder dem zu bergenden Gegenstand eine Verbindung zwischen dem mit dem Bergegeschirr verbundenen Zugelement und der Bergungsvorrichtung herzustellen, ist es vorzugsweise vorgesehen, dass das Zugelement als auch die Bergungsvorrichtung Verbindungselemente zu deren Verbindung aufweisen.

Die Bergungsvorrichtung kann beispielsweise eine mit einer hubschraubertypabhängigen Aufhängung am Hubschrauber angebrachte gesteuerte Kinematik aufweisen, die mit einem Fixierungs- und Horizontalfördermechanismus und einer Übergabestation zur Vertikalförderung ausgestattet ist.

Das Pilotseil wird durch den genannten Mechanismus außerhalb des Abwindbereiches (Downwash) des Hubschraubers kontaktiert, fixiert und anschließend bis zum Erreichen des Verbindungselementes zur Übergabestation weitergefördert. Das Verbindungselement wird mittels der Übergabestation in den vertikalen Fördermechanismus überführt, der in einer vorzugsweise form- und/oder kraftschlüssigen Verbindung ein Nachziehen des Lastseiles mit dem zu bergenden Objekt/Person beispielsweise in Richtung Hubschrauberkabine bewerkstelligt.

Bei der Vertikalförderung, bisher in der Regel durch einschlägig bekannte Systeme wie Seilwinden bewerkstelligt, wird vorzugsweise ein weitgehender Einsatz automatisierter Systeme, beispielsweise Lösungen aus der Handhabungs- und Fördertechnik (Roboter- und Steuerungstechnik) verwendet.

Ein Hubschrauber erzeugt aufgrund der Bewegung der Rotorblätter unter sich in einem zylinderförmigen Bereich (Abwindbereich) mit einem Durchmesser, welcher der Länge von zwei Rotorblättern entspricht, einen erheblichen Abwind. Die auf den Grund treffenden Luftmassen werden nach außen gedrückt und teilweise wieder nach oben gesogen (In-Gorund-Effekt).

Bei Gegenwind (Stillstand über Grund) bzw. mit zunehmender Fluggeschwindigkeit wird der "Downwash"-Bereich mit der Windrichtung "weggedrückt". Dieser Effekt ermöglicht eine Ausnutzung hinsichtlich der Art, dass die gesteuerte Kinematik bei zunehmender Windgeschwindigkeit geringer werdende Distanzen zu durchmessen hat, um ein Einfangen des Auftriebselementes außerhalb der Verwirbelungsbereiche von Downwash und diesen Bereich umgebenden thermischen Bedingung zu gewährleisten. Sie ist diesen Bedingungen zufolge steuerbar und anpassbar. Hierbei werden Leichtbaukonstruktionen unter Verwendung leichter Materialien wie z.B. Verbundstoffe und Carbonfasern verwendet.

Der mit dem Bergegeschirr über das längliche Zugelement verbundene Ballon (Auftriebselement) beschreibt aufgrund von Thermik und Wellengang und damit einher gehender Pendelbewegungen ebenfalls einen dreidimensionalen Bereich (Pendelbereich), innerhalb dessen eine Verbindung zwischen Bergungsvorrichtung und Bergegeschirr hergestellt werden soll. Dabei ist ein seitlicher Ausleger derart zu dimensionieren, dass sich der Pendelbereich des Ballons und der Abwindbereich des Hubschraubers nicht überlappen.

Um ein besonders schnelles Herstellen der Verbindung zwischen Bergungsvorrichtung und Zugelement des Bergegeschirrs zu ermöglichen, ist es vorgesehen, dass die Bergungsvorrichtung und/oder das Bergegeschirr Mittel zur exakten Bestimmung der Position des Zugelementes, insbesondere des Verbindungselementes oder der Verbindungselemente, welche Bergungsvorrichtung und Zugelement verbinden, beispielsweise einer Kupplung, aufweisen. Solche Mittel zur Bestimmung der genauen Position sind in einer bevorzugten Ausführungsvariante ultraschallbasierte Vorrichtungen. Hierdurch wird es durch eine Auswertung der Daten und eine Bestimmung der Position des Zugelementes und/oder des Verbindungselementes ermöglicht, ein Verbinden von Bergungsvorrichtung und Zugelement auch bei schlechten Sichtverhältnissen, beispielsweise nachts, zu gewährleisten. Hierfür weisen die Bergungsvorrichtung und gegebenenfalls das Zugelement oder das Verbindungselement Ultraschallsender bzw. Ultraschallempfänger auf.

In einer weiteren, bevorzugten Ausführungsvariante ist es vorgesehen, dass das Bergegeschirr Sensoren für biometrische Daten von Personen, wie Herzschlag oder Körpertemperatur aufweist. Diese können ebenfalls zu den Rettungskräften drahtlos übermittelt werden. Hierfür sind am Bergegeschirr Mittel zum Aussenden biometrischer Daten vorgesehen. Hierdurch wird es für Rettungskräfte bei der Bergung größerer Personengruppen möglich, eine Entscheidung dahingehend zu treffen, welche Personen zuerst geborgen werden müssen, da sie im Gegensatz zu anderen Personen dringender eine medizinische Behandlung benötigen.

Die vorgenannten Mittel ermöglichen es, den Bergungsprozess von der Signalgebung (erstes Aussenden eines Notsignals) bis zur endgültigen Sicherung (Bergung) der Person(en)/Objekt(e) in seinen einzelnen Phasen durch die Rettungskräfte steuern, kontrollieren und aktiv beeinflussen zu können. Hierdurch wird eine den Gegebenheiten entsprechende, optimierte Prozesssteuerung möglich.

Die Erfindung wird nachstehend in einem Ausführungsbeispiel anhand der beigefügten Zeichnungen näher erläutert.

Es zeigen:
- Figur 1:: ein erfindungsgemäßes System zur Bergung von Personen oder Gegenständen in schematischer Darstellung,
- Figur 2:: ein Verbindungselement des Bergungsgeschirrs und ein Verbindungselement der Bergungsvorrichtung in perspektivischer Darstellung und
- Figur 3:: ein erfindungsgemäßes System zur Bergung von Personen oder Gegenständen mit einer Vielzahl von mit der Bergungsvorrichtung verbundenen Verbindungselementen in schematischer Darstellung.

Zur Vorsorge für den Fall von Havarien in der Schifffahrt können Schiffe mit dem so genannten Emergency Position Indication Radio Beacon (EPIRB) ausgerüstet werden. Durch den Einsatz von EPIRB können zu bergende Objekte auch über große Entfernungen hinweg gut lokalisiert werden, wodurch ein zeitaufwendiges Suchen verunglückter Personen oder Gegenstände vermieden werden kann. Durch die Herabsetzung von zu langen Suchzeiten wegen nicht rechtzeitig oder gar nicht erfolgter Notrufe und dadurch zu spät oder nicht erfolgter Bergungen kann die Lebensgefahr von in Not geratenen Personen sowohl auf dem Wasser als auch in anderen schwer zugänglichen Gebieten wie Bergen deutlich gesenkt werden. Nach einem erfolgten Notruf unter Angabe einer Position, beispielsweise unter Einsatz von satellitengestütztnen Ortungs- und Kommunikationssystemen wie EPIRB/GPS (Global Positioning System), erfolgt eine Weitergabe an Rettungskräfte, welche sich schnellstmöglich zum Zielgebiet begeben. Beispielsweise besitzt ein EPIRB-Sender ein solch großes Gewicht, dass er nicht von einzelnen havarierten, im Wasser befindlichen Personen (beispielsweise in der Schwimmweste) mitgeführt werden kann. Daher würde ein EPIRB-Positionssignal im Falle eines sinkenden Schiffes nur solange ausgesendet werden können, bis das Schiff gesunken ist. Die zu bergende Person befindet sich nach dem Sinken des Schiffes im Wasser (mit einer Schwimmweste).

Da während der Zeit, in der sich die Rettungskräfte in das Zielgebiet begeben, die Position der im Wasser treibenden, zu bergenden Person nicht exakt bekannt ist (nur die Ausgangsposition), ist es vorteilhaft, durch geeignete Mittel von der Ausgangsposition der zu bergenden Person ausgehend, die Abdrift aufgrund von Strömung des Gewässers und der Windbedingungen zu ermitteln. Es ist mit der max. Abdrift zu rechnen, die in der Zeit seit dem Absetzen des Notrufsignals von der Ursprungsposition (z.B.EPIRB-Signal unter Angabe von GPS-Positionsdaten) bis zum Eintreffen der Rettungskräfte an diesem Ort, möglich ist.

Die Sender und Empfänger des hubschrauberseitigen Systems sind in der Lage, über diese Distanz im Umkreis um den Havarie-/Ausgangskoordinate eine Verbindung zum auf Bereitschaft geschalteten Empfänger (Empfänger für drahtlos übertragbare Signale integriert im Bergungsgeschirr an der zu bergenden Last/Person) herzustellen und den ebenfalls integrierten Sender und das Mittel zur Positionsbestimmung zu aktivieren, wodurch das Mittel zum Aussenden von Positionsdaten und ggf. das Mittel zum Aussenden biometrischer Daten die entsprechenden Daten an die Rettungskräfte übermitteln.

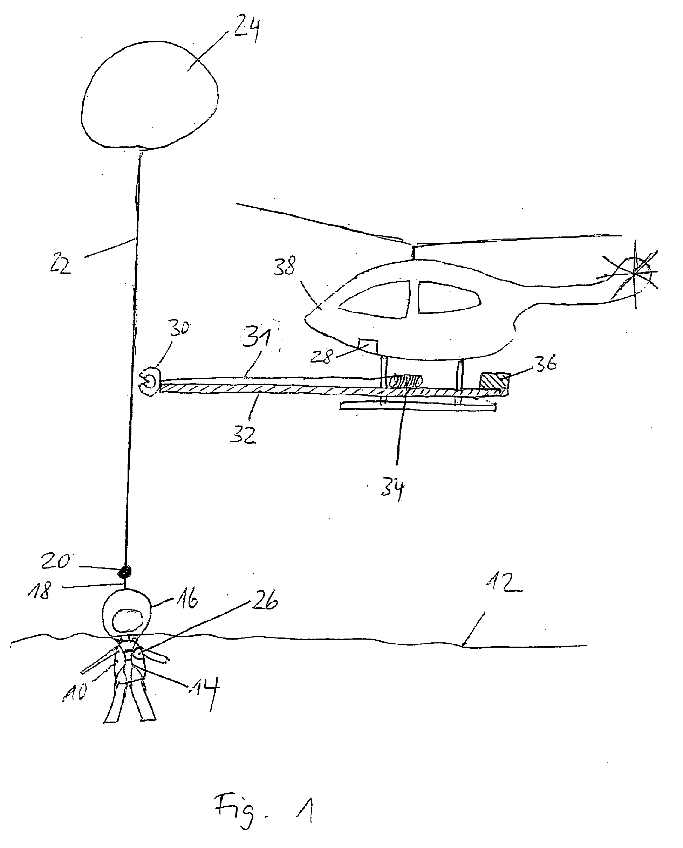

In Figur 1 ist die Bergung einer im Wasser befindlichen Person 10 mittels eines Hubschraubers 38 schematisch dargestellt. Aufgrund eines einmalig zu Beginn der Havarie ausgesendeten Notrufsignals (EPIRB) sind Rettungskräfte mit dem Hubschrauber 38 zur Ausgangsposition des EPIRB-Signals gelangt.

Um die Person nun möglichst schnell auffinden zu können, wird das Aussenden der Positionsdaten durch die Besatzung des Hubschraubers 38 mittels drahtlos übertragener Signale ausgelöst. Dazu dient der Sender/Empfänger 28. Diese vom Hubschrauber 38 ausgesendeten Aktivierungssignale werden vom (hier nicht dargestellten) Empfänger, welcher sich im Bergegeschirr bei der zu bergenden Person 10 befindet, empfangen. Das Bergegeschirr weist weiterhin die Schwimmweste 14 mit Tragegurt, den Haltebügel 16, das Lastseil 18 (erstes längliches Zugelement), das Verbindungsstück 20, das Pilotseil 22 (zweites längliches Zugelement), den Ballon 24 (Auftriebselement), ein Mittel zum Auslösen des Auftriebselements und das Mittel 26 zum Aussenden von Positionssignalen auf.
Die zu bergende Person 10 befindet sich im Wasser teils oberhalb, teils unterhalb der Wasseroberfläche 12. Die zu bergende Person 10 ist am erfindungsgemäßen Bergegeschirr befestigt. Dieses Bergegeschirr ist im deaktivierten Zustand als Schwimmweste 14 kompakt ausgebildet. Der Haltebügel 16, das Lastseil 18, das Verbindungselement 20, das Pilotseil 22 und der Ballon 24 sind im deaktivierten Zustand innerhalb der Schwimmweste 14 integriert und nicht sichtbar.

Im Falle einer Havarie werden zunächst EPIRB- oder ähnliche Notrufsignale zur Kontaktierung eines Rettungsteams ausgesendet. Das Bergegeschirr verbleibt zunächst im deaktivierten Zustand. Das Mittel zum Auslösen des Auftriebselements (Mittel zum Befüllen des Ballons 24 mit Heliumgas) verbleibt daher ebenfalls zunächst im deaktivierten Zustand. Sobald Rettungskräfte im Zielgebiet eingetroffen sind, senden diese ein erstes Aktivierungssignal für das Bergegeschirr aus. Hierdurch wird das Mittel 26 zum Aussenden vom Positionsdaten aktiviert und sendet Positionsdaten aus. Bei Erreichen des Nahbereiches kann nach Notwendigkeit mit Hilfe von zusätzlichen optischen sich am Bergegeschirr befindlichen Signaleinrichtungen ein erster Sichtkontakt zu der zu bergenden Person 10 hergestellt werden. Danach senden die Rettungskräfte ein zweites Aktivierungssignal an das Bergegeschirr aus und aktivieren das Zielerfassungs- und Leitsystem (z.B. Laser: kleiner Laser am Bergegeschirr, großer Laser am Hubschrauber).

Hierdurch wird ebenfalls die Befüllung des Ballons 24 mittels eines (hier nicht dargestellten) Druckbehälters mit Heliumgas, ausgelöst.

Durch das Befüllen des Ballons 24 mit Helium wird die Schwimmweste 14 geöffnet und der innerhalb der Schwimmweste 14 angeordnete Ballon 24 steigt nach oben auf. Hierdurch wird ebenfalls das Pilotseil 22, das Verbindungselement 20 und das Lastseil 18 nach oben gezogen. Das Pilotseil 22, welches aus einem Material geringen Gewichts, beispielsweise einer Angelsehne, ausgebildet ist, verbindet den Ballon 24 mit dem Verbindungselement 20. Das Lastseil 18 wird jedoch zunächst nur ein Stück aus seinem Vorratsbehälter (in der Schwimmweste 14 integriert) heraus gezogen, so dass der Ballon 24 nicht das gesamte Gewicht des Lastseils 18 tragen können muss. In einer besonders bevorzugten (hier nicht dargestellten) Variante wird bei Befüllung des Ballons 24 zunächst nur das Pilotseil 22 aus seinem Vorratsbehälter (in der Schwimmweste 14 integriert) heraus gezogen; das Lastseil 18 sowie das Verbindungsstück 20 verbleiben zunächst noch im Bergegeschirr. Hierdurch kann das Auftriebselement (Ballon 24) noch geringer dimensioniert werden. Das Lastseil 18 wird erst später (nach erfolgter Verbindung von Pilotseil 22 und Bergungsvorrichtung) nachgezogen.

Das Verbindungselement 20 dient dazu, das Lastseil 18 mit einer am Hubschrauber befindlichen Seilwinde 34 (Mittel zum Einholen) zu verbinden. Hierzu ist es vorgesehen, dass das Verbindungselement 30 der Bergungsvorrichtung in das Verbindungselement 20 des Bergegeschirrs eingreifen oder einrasten kann, und dadurch das Lastseil 18 des Bergegeschirrs mit der Seilwinde 34 (Mittel zum Einholen) verbunden wird. Dadurch wird ein Einholen der zu bergenden Person 10 in den Hubschrauber 38 ermöglicht. Dabei wird zunächst das Pilotseil 22 im Luftraum ergriffen oder anderweitig kontaktiert und soweit eingeholt oder weiter transportiert, bis ein Kontakt zum Verbindungselement 20 hergestellt werden kann. Dann wird zwischen den Verbindungselementen 20 und 30 eine Verbindung hergestellt und nachfolgend das sich an das Verbindungselement 20 anschließende Lastseil 18 eingeholt. Auf die Verbindungselemente 20, 30 kann dann verzichtet werden, wenn die bergungsseitig vorhandenen Vorrichtungen das Pilotseil 22 und das Lastseil 18 entsprechend kontaktieren und fördern (einholen) können.

Das Aktivieren des Bergungsgeschirrs, also insbesondere das Befüllen des Ballons 24 mit Heliumgas, kann alternativ manuell durch die zu bergende Person 10 erfolgen.

Die Schwimmweste 14 weist einen Tragegurt auf und ist so beschaffen, dass die Person 10 sicher an ihr gehalten werden kann. Innerhalb des Bergegeschirrs befindet sich ein (hier nicht dargestelltes) Aufrollsystem, in welches das Lastseil 18, das für die Last der zu bergenden Person 10 ausgelegt ist, aufgerollt ist. Die Größe des Verbindungselementes 20 des Bergegeschirrs ist derart gewählt, dass sie mit der Größe des Verbindungselementes 30 der Bergungsvorrichtung korrespondiert und hierdurch eine Verbindung zwischen den beiden Verbindungselementen 20, 30 und damit zwischen dem Lastseil 18 des Bergegeschirrs und der Seilwinde 34 der Bergungsvorrichtung hergestellt werden kann. Am Hubschrauber 38 ist ein Teleskoparm 32 und ein Gegengewicht 36 angeordnet. Weiterhin befindet sich am Hubschrauber 38 die Bergungsvorrichtung, welche eine Seilwinde 34 mit einer Horizontalfördereinrichtung 31 (mit Seil) aufweist. Das in der Seilwinde 34 befindliche Seil wird über den Teleskoparm 32 (mittels der Horizontalfördereinrichtung 31) zum seitlichen Ende des Teleskoparmes 32 geführt. Am vorderen Ende der Horizontalfördereinrichtung 31 ist das Verbindungselement 30 angeordnet. Der Teleskoparm 32 kann am Hubschrauber 38 sowohl an Seitenausstiegen, Bodenklappen, Heckklappen, am Fahrwerk oder an den Kufen befestigt werden. Die Position des Gegengewichtes 36 kann je nach aufzunehmender Last eingestellt werden.
Der Hubschrauber 38 erzeugt unter sich in einem dreidimensionalen, säulenförmigen Bereich mit einem kreisförmigen Querschnitt einen nicht zu vernachlässigenden Abwind, welcher zum so genannten IG-Effekt (In-Ground-Effect) führt. Mit Hilfe des Teleskoparmes 32 wird es jedoch vermieden, dass das am Ballon 24 hängende Pilotseil 22 in den Abwind der Rotorblätter gerät und daher das Herstellen einer Verbindung zwischen den Verbindungselementen 20, 30 erschwert wird. Der Hubschrauber 38 hält zum Ballon 24 sowie zum Pilotseil 22 stets einen entsprechenden Sicherheitsabstand ein. Daher kann die Position des Hubschraubers 38 zum Ballon 24 in der Realität (Hubschrauber 38 regelmäßig höher als Ballon 24) von der schematischen Darstellung in den Figuren abweichen.

Nach dem Herstellen einer Verbindung zwischen den Verbindungselementen 20, 30 ist es erfindungsgemäß möglich, die Person 10 über die Seile (einerseits das zwischen Haltebügel 16 und Verbindungselement 20 angeordnete Lastseil 18 des Bergegeschirrs und andererseits das zwischen Verbindungselement 30 und Seilwinde 34 (Mittel zum Einholen des länglichen Zugelements) geführte Seil, welches über den Teleskoparm 32 seitlich vom Helikopter 38 geführt wird) durch Aktivieren der Seilwinde 34 zum Hubschrauber 38 zu bewegen und damit aus dem Wasser zu bergen.

In einer bevorzugten Ausführungsvariante weist das Bergegeschirr entsprechende Sicherheitsmerkmale auf, beispielsweise wird die Aufrollvorrichtung für das Pilotseil 22 so lange blockiert, bis das Mittel zum Befüllen des Ballons 24, also der Druckbehälter/Kaltgas-Generator aktiviert wird. In diesem Moment wird auch die Aufrollvorrichtung freigegeben, so dass das innerhalb dieser Aufrollvorrichtung befindliche Pilotseil 22 mit dem Ballon 14 nach oben steigen kann. Ebenso kann das Lastseil 18 erst dann freigegeben werden, wenn zwischen den Verbindungselementen 20, 30 eine Verbindung hergestellt worden ist.

In einer weiteren Ausführungsvariante weist das Lastseil 18 einen Dämpfer, beispielsweise ein Federelement auf, welches betragsmäßig hohe Kräfte, beispielsweise ruckartig angreifende Zugkräfte zumindest teilweise aufnimmt und dadurch ein Reißen des Lastseils 18 verhindert.

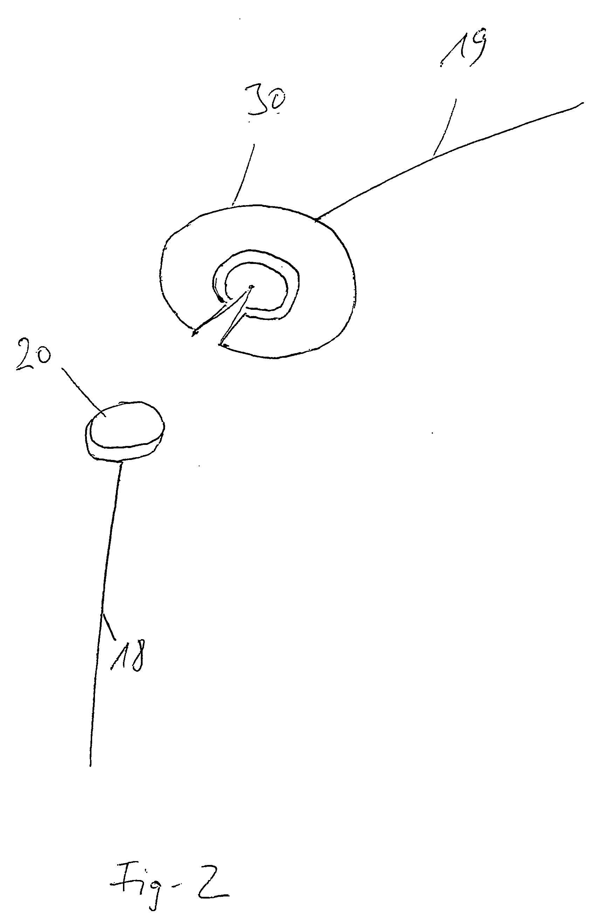

Figur 2 zeigt eine bevorzugte Ausgestaltung des Verbindungselementes 20 des Bergungsgeschirrs und des Verbindungselementes 30 der Bergungsvorrichtung in perspektivischer Darstellung. Das Verbindungselement 20 des Bergegeschirrs ist als verdicktes Endstück des Lastseils 18 ausgebildet, wobei es eine flache, zylindrische Form besitzt. Das Verbindungselement 30 der Bergungsvorrichtung ist als ein in seinen Abmessungen korrespondierendes Gegenstück zur Aufnahme des Verbindungselementes 20 ausgebildet. Dabei weist das Verbindungselement 30 eine schlitzförmige Ausnehmung auf, in welche das Lastseil 18 geführt werden kann. Wird das Verbindungselement 20 von oben in das Verbindungselement 30 eingeführt, entsteht eine formschlüssige Verbindung zwischen den beiden Verbindungselementen 20, 30.

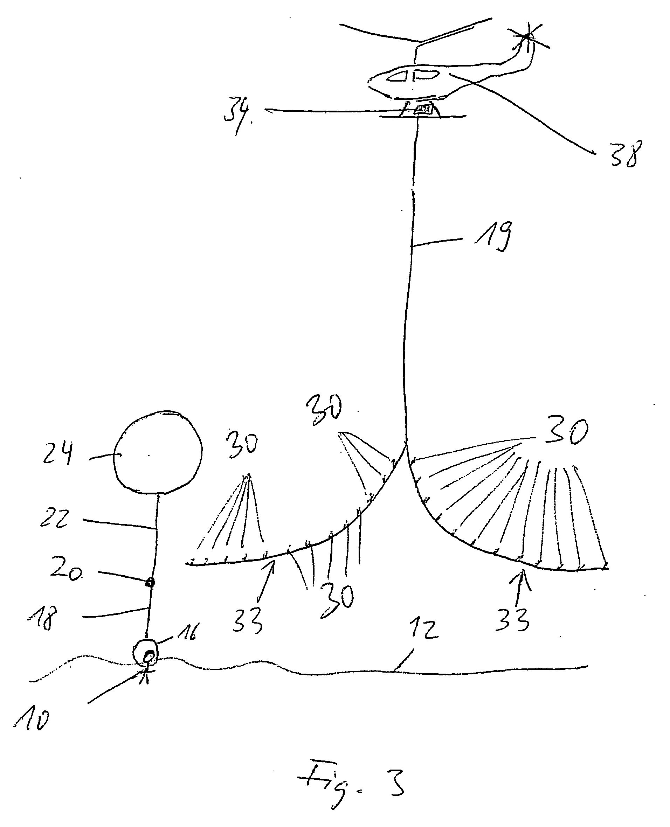

Figur 3 zeigt ein erfindungsgemäßes System zur Bergung von Personen oder Gegenständen mit einer Vielzahl von mit der Bergungsvorrichtung verbundenen Verbindungselementen 30 in schematischer Darstellung. In dieser bevorzugten Ausführungsvariante ist es vorgesehen, dass die am Hubschrauber 38 angeordnete Bergungsvorrichtung eine Seilwinde 34 mit einer Vertikalfördereinrichtung 19 (mit Seil) aufweist, wobei das Seil zwei seitlichen Auslegern 33 verbunden ist, an welchen wiederum eine Vielzahl von Verbindungselementen 30 angeordnet sind. Durch entsprechende Ausformung der Ausleger 33 kann ein vereinfachtes Kontaktieren des Verbindungselementes 20 mit einem der Verbindungselemente 30 realisiert werden. Dabei sind die Verbindungselemente 30 derart angeordnet, dass sie den vom Verbindungselement 20 aufgrund der äußeren Einflüsse wie Wind und Wellenbewegung beschrieben dreidimensionalen Raum abdecken.

In einer alternativen, bevorzugten Ausführungsvariante wird das Verbindungselement 20 durch das Lastseil 18 selbst ausgebildet, wodurch das zuvor beschriebene verdickte Endstück (Fig. 2) entfällt. Dazu ist es vorgesehen, dass das bergungsvorrichtungsseitige Verbindungselement 30 derart ausgebildet ist, dass es allein mit dem Lastseil 18 ohne Zuhilfenahme weitere Verbindungselemente eine Verbindung herstellen kann. Ein diese Bedingungen erfüllendes Verbindungselement 30 ist beispielsweise eine Greifvorrichtung, welche das Lastseil 18 ergreifen und festhalten kann. Ein besonderer Vorteil der Tatsache, dass zunächst nur das Pilotseil 22 (zweites Zugelement) und Ballon 24 (Auftriebselement) in den Luftraum verbracht werden, ist, dass die Last (über das Lastseil 18) später nicht im seitlichen Bereich des Hubschraubers 38 (wie das Pilotseil 22), sondern in einem zentralen Bereich, d.h. unter dem Hubschrauber 38 aufgenommen werden kann. Dazu wird das Pilotseil 22 nach seiner Kontaktierung zunächst mittels der Vertikal- und Horizontalfördereinrichtungen 19, 31 in einen zentralen Bereich des Hubschraubers 38 verbracht und erst danach soweit eingeholt, dass das Lastseil 18 erreicht wird und nachfolgend die zu bergende Person 10 eingeholt werden kann. Daher greift die eigentliche Last nicht im seitlichen Bereich des Auslegers 32, sondern in einem zentralen Bereich an, was zu einer Erhöhung der Flugsicherheit führt.

Das erfindungsgemäße Verfahren und das erfindungsgemäße System zur Bergung von Personen und/oder Gegenständen kann besonders vorteilhaft zur Seenotrettung, zur zivilen und/oder militärischen Evakuierung als auch zur Bergung von in Not geratenen Expeditionen in Gebirgen, Eislandschaften, Sümpfen, Urwäldern und anderen schwer zugänglichen Gebieten angewendet werden.

## Patentansprüche

1. Verfahren zur Bergung von Personen (10) und/oder Gegenständen an einem Zielpunkt oder innerhalb eines Zielgebietes mit folgenden Verfahrensschritten:
- Verbringen einer Bergungsvorrichtung (28, 30, 31, 32, 34, 36, 38) an den Zielpunkt oder in das Zielgebiet, wobei zum Auffinden der zu bergenden Person (10) und/oder des zu bergenden Gegenstandes Positionsdaten verwendet werden, welche durch eine bei der zu bergenden Person (10) und/oder dem zu bergenden Gegenstand befindlichen Vorrichtung (14, 16, 18, 20, 22, 24, 26) ausgesendet werden,
- Verbringen eines mit der zu bergenden Person (10) und/oder dem zu bergenden Gegenstand verbundenen, längliches Zugelementes (18, 22) in den Luftraum über oder seitlich der zu bergenden Person (10) und/oder des zu bergenden Gegenstandes,
- Herstellen einer Verbindung zwischen der Bergungsvorrichtung (28, 30, 31, 32, 34, 36, 38) und dem Zugelement (18, 22) und
- Einholen der zu bergenden Person (10) und/oder des zu bergenden Gegenstandes,
**dadurch gekennzeichnet, dass**
das Verbringen des Zugelementes (18, 22) in den Luftraum mittels drahtlos übertragener Signale ausgelöst wird.

2. Verfahren nach Anspruch 1,
**dadurch gekennzeichnet, dass**
das Aussenden der Positionsdaten mittels drahtlos übertragener Signale ausgelöst wird.

3. Verfahren nach Anspruch 1 oder 2,
**dadurch gekennzeichnet, dass**
vorab eine Bestimmung des Zielpunktes oder des Zielgebietes erfolgt und das Aussenden der Positionsdaten erst erfolgt, wenn die Bergungsvorrichtung (28, 30, 31, 32, 34, 36, 38) im Zielgebiet eingetroffen ist.

4. Verfahren nach einem der vorhergehenden Ansprüche,
**dadurch gekennzeichnet, dass**
das Aussenden von Positionsdaten mittels drahtlos übertragener Signale durch Rettungskräfte ausgelöst wird.

5. Verfahren nach einem der vorangehenden Ansprüche,
**dadurch gekennzeichnet, dass**
das Zugelement (18, 22) durch ein mit dem Zugelement (18, 22) verbundenen Auftriebselement (24) in den Luftraum über oder seitlich der zu bergenden Person (10) und/oder des zu bergenden Gegenstandes verbracht wird.

6. Verfahren nach einem der vorangehenden Ansprüche,
**dadurch gekennzeichnet, dass**
die Positionsdaten in Form von Laserlicht und/oder Radiowellen ausgesendet werden.

7. System zur Bergung von Personen (10) und/oder Gegenständen an einem Zielpunkt oder innerhalb eines Zielgebietes mit einem Bergegeschirr (14, 16, 18, 20, 22, 24) und einer Bergungsvorrichtung (28, 30, 31, 32, 34, 36, 38) für das Bergegeschirr (14, 16, 18, 20, 22, 24), wobei das mit der zu bergenden Person (10) und/oder dem zu bergenden Gegenstand verbundene oder verbindbare Bergegeschirr (14, 16, 18, 20, 22, 24) ein längliches Zugelement (18, 22), ein Auftriebselement (24), Mittel zum Auslösen des Auftriebselements, Mittel zum Bestimmen von Positionsdaten und Mittel zum Aussenden von Positionsdaten (26) aufweist und die Bergungsvorrichtung (28, 30, 31, 32, 34, 36, 38) mit dem Bergegeschirr (14, 16, 18, 20, 22, 24) verbunden oder verbindbar ist und Mittel (34) zum Einholen des Zugelementes (18, 22) des Bergegeschirrs (14, 16, 18, 20, 22, 24) aufweist,
**dadurch gekennzeichnet, dass**
das Mittel zum Auslösen des Auftriebselements (24) durch drahtlos übertragbare Signale aktivierbar ist.

8. System nach Anspruch 7,
**dadurch gekennzeichnet, dass**
das Mittel (26) zum Aussenden von Positionsdaten durch drahtlos übertragbare Signale aktivierbar ist.

9. System nach Anspruch 7 oder 8,
**dadurch gekennzeichnet, dass**
das Bergegeschirr (14, 16, 18, 20, 22, 24) ein erstes längliches Zugelement (18) aufweist, welches mit einem zweiten länglichen Zugelement (22) verbunden ist, wobei das zweite längliche Zugelement (22) mit dem Auftriebselement (24) verbunden ist und ein geringeres Gewicht als das erste längliche Zugelement (18) aufweist.

10. System nach einem der Ansprüche 7 bis 9,
**dadurch gekennzeichnet, dass**
das Bergegeschirr (14, 16, 18, 20, 22, 24) ein zwischen erstem Zugelement (18) und zweitem Zugelement (22) angeordnetes Verbindungselement (20) zur Verbindung mit der Bergungsvorrichtung (28, 30, 31, 32, 34, 36, 38) aufweist und die Bergungsvorrichtung (28, 30, 31, 32, 34, 36, 38) eine Vielzahl von Verbindungselementen (30) zur Verbindung mit dem Bergegeschirr (14, 16, 18, 20, 22, 24) aufweist.

11. System nach einem der Ansprüche 7 bis 10,
**dadurch gekennzeichnet, dass**
das Mittel zum Auslösen des Auftriebselements (24) einen Empfänger für drahtlos übertragbare Signale, eine Signalverarbeitung und einen Auslöser für das Auftriebselement (24) aufweist, wobei der Auslöser mit dem Auftriebselement (24) verbunden ist.

12. System nach einem Ansprüche 10 oder 11,
**dadurch gekennzeichnet, dass**
das Verbindungselement (30) der Bergungsvorrichtung (28, 30, 31, 32, 34, 36, 38) in das Verbindungselement (20) des Bergegeschirrs (14, 16, 18, 20, 22, 24) eingreifbar oder einrastbar ist.

13. System nach Anspruch 12,
**dadurch gekennzeichnet, dass**
das Verbindungselement (20) des Bergegeschirrs (14, 16, 18, 20, 22, 24) ein verdicktes Endstück und das Verbindungselement (30) der Bergungsvorrichtung (28, 30, 31, 32, 34, 36, 38)ein in seinen Abmessungen korrespondierendes Gegenstück zur Aufnahme des Verbindungselementes (20) ist.

14. System nach einem der Ansprüche 7 bis 13,
**dadurch gekennzeichnet, dass**
die Bergungsvorrichtung (28, 30, 31, 32, 34, 36, 38) einen Ausleger (32) aufweist, über welchen das mindestens eine Verbindungselement (30) geführt ist und dass die Bergungsvorrichtung (28, 30, 31, 32, 34, 36, 38) ein weiteres längliches Zugelement (31) aufweist, über welches das Verbindungselement (30) gehalten wird, wobei am Ausleger (32) Gegengewichte (36) zum Ausgleich der zu bergenden Last (10) anordenbar sind.

## Claims

1. A method for saving people (10) and/or objects at a target point or within a target area, the method comprising the following method steps:
- transporting a saving device (28, 30, 31, 32, 34, 36, 38) to the target point or into the target area, wherein position data that is emitted by a device (14, 16, 18, 20, 22, 24, 26) positioned on the person (10) to be saved and/or on the object to be saved is used to trace the person (10) to be saved and/or the object to be saved,
- transporting a longitudinal traction element (18, 22) which is connected to the person (10) to be saved and/or to the object to be saved in the air space above or to the side of the person (10) to be saved and/or the object to be saved,
- establishing a connection between the saving device (28, 30, 31, 32, 34, 36, 38) and the traction element (18, 22), and
- hauling in the person (10) to be saved and/or the object to be saved,
**characterized in that**
the transporting of the traction element (18, 22) in the air space is triggered using wirelessly transmitted signals.

2. The method according to claim 1,
**characterized in that**
the emission of the position data is released using wirelessly transmitted signals.

3. The method according to claim 1 or 2,
**characterized in that**
a determination of the target point or the target area ist carried out in advance and that the emission of the position data is not carried out until the saving device (28, 30, 31, 32, 34, 36, 38) has arrived in the target area.

4. The method according to one of the preceding claims,
**characterized in that**
the emission of position data is triggered by saving forces using wirelessly transmitted signals.

5. The method according to one of the preceding claims,
**characterized in that**
the traction element (18, 22) is transported in the air space above or to the side of the person (10) to be saved and/or the object to be saved by a lift element (24) which is connected to the traction element (18, 22).

6. The method according to one of the preceding claims,
**characterized in that**
the position data is emitted in the form of laser light and/or radio waves.

7. A system for saving people (10) and/or objects at a target point or within a target area by means of a rescue harness (14, 16, 18, 20, 22, 24) and a saving device (28, 30, 31, 32, 34, 36, 38) for the rescue harness (14, 16, 18, 20, 22, 24), wherein the rescue harness (14, 16, 18, 20, 22, 24) that is connected or connectable to the person (10) to be saved and/or the object to be saved comprises a longitudinal traction element (18, 22), a lift element (24), means for releasing the lift element, means for determining position data and means for emitting position data (26), and wherein the saving device (28, 30, 31, 32, 34, 36, 38) is connected or connectable to the rescue harness (14, 16, 18, 20, 22, 24) and comprises means (34) for hauling in the traction element (18, 22) of the rescue harness (14, 16, 18, 20, 22, 24),
**characterized in that**
the means for releasing the lift element (24) can be activated using wirelessly transmittable signals.

8. The system according to claim 7,
**characterized in that**
the means (26) for emitting position data can be activated using wirelessly transmittable signals.

9. The system according to claim 7 or 8,
**characterized in that**
the rescue harness (14, 16, 18, 20, 22, 24) comprises a first longitudinal traction element (18) which is connected to a second longitudinal traction element (22), wherein the second longitudinal traction element (22) is connected to the lift element (24) and has a lower weight than the first longitudinal traction element (18).

10. The system according to one of claims 7 to 9,
**characterized in that**
the rescue harness (14, 16, 18, 20, 22, 24) comprises a connecting element (20) disposed between first and second traction elements (18, 22) in order to connect the rescue harness (14, 16, 18, 20, 22, 24) to the saving device (28, 30, 31, 32, 34, 36, 38), and that the saving device (28, 30, 31, 32, 34, 36, 38) comprises a plurality of connecting elements (30) in order to connect the saving device (28, 30, 31, 32, 34, 36, 38) to the rescue harness (14, 16, 18, 20, 22, 24).

11. The system according to one of claims 7 to 10,
**characterized in that**
the means for releasing the lift element (24) comprises a receiver for wirelessly transmittable signals, a signal processing and a release for the lift element (24), wherein the release is connected to the lift element (24).

12. The system according to one of claims 10 or 11,
**characterized in that**
the connecting element (30) of the saving device (28, 30, 31, 32, 34, 36, 38) is engageable or lockable into the connecting element (20) of the rescue harness (14, 16, 18, 20, 22, 24).

13. The system according to claim 12,
**characterized in that**
the connecting element (20) of the rescue harness (14, 16, 18, 20, 22, 24) is a thickened end piece and that the connecting element (30) of the saving device (28, 30, 31, 32, 34, 36, 38) is a counterpart with corresponding dimensions in order to receive the connecting element (20).

14. The system according to one of claims 7 to 13,
**characterized in that**
the saving device (28, 30, 31, 32, 34, 36, 38) comprises a cantilever (32) by which at least the one connecting element (30) is guided, and that the saving device (28, 30, 31, 32, 34, 36, 38) comprises a further longitudinal traction element (31) by which the connecting element (30) is held, wherein counterweights (36) can be disposed on the cantilever (32) in order to balance the burden (10) which is to be saved.

## Revendications

1. Procédé de sauvetage de personnes (10) et/ou d'objets à un point cible ou dans une zone cible, le procédé comprenant les étapes de procédé suivantes:
- le transport d'un dispositif de sauvetage (28, 30, 31, 32, 34, 36, 38) au point cible ou dans la zone cible, des données de position émises par un dispositif (14, 16, 18, 20, 22, 24, 26) se trouvant sur la personne (10) à sauver et/ou sur l'objet à sauver étant utiliséés afin de localiser la personne (10) à sauver et/ou l'objet à sauver,
- le transport d'un élément de traction (18, 22) allongé relié à la personne (10) à sauver et/ou à l'objet à sauver dans l'espace aérien au dessus ou sur le côté de la personne (10) à sauver et/ou de l'objet à sauver,
- l'établissement d'une liaison entre le dispositif de sauvetage (28, 30, 31, 32, 34, 36, 38) et l'élément de traction (18, 22) et
- l'action de haler la personne (10) à sauver et/ou l'objet à sauver,
**caractérisé en ce que**
le transport de l'élément de traction (18, 22) dans l'espace aérien est déclenché au moyen de signaux transmis sans fil.

2. Procédé selon la revendication 1,
**caractérisé en ce que**
l'émission des données de position est déclenchée au moyen de signaux transmis sans fil.

3. Procédé selon la revendication 1 ou 2,
**caractérisé en ce qu'**
une détermination du point cible ou de la zone cible est effectuée préalablement, et que l'émission des données de position n'est effectuée avant que le dispositif de sauvetage (28, 30, 31, 32, 34, 36, 38) ne soit arrivé dans la zone cible.

4. Procédé selon l'une des revendications précédentes,
**caractérisé en ce que**
l'émission de données de position est déclenchée par des forces de secours au moyen de signaux transmis sans fil.

5. Procédé selon l'une des revendications précédentes,
**caractérisé en ce que**
l'élément de traction (18, 22) est transporté dans l'espace aérien au dessus ou sur le côté de la personne (10) à sauver et/ou de l'objet à sauver par un élément de portance (24) relié à l'élément de traction (18, 22).

6. Procédé selon l'une des revendications précédentes,
**caractérisé en ce que**
les données de position sont émises sous forme de lumière laser et/ou d'ondes radioélectriques.

7. Système de sauvetage de personnes (10) et/ou d'objets à un point cible ou dans une zone cible au moyen d'un harnais de sauvetage (14, 16, 18, 20, 22, 24) et d'un dispositif de sauvetage (28, 30, 31, 32, 34, 36, 38) conçu pour le harnais de sauvetage (14, 16, 18, 20, 22, 24), dans lequel le harnais de sauvetage (14, 16, 18, 20, 22, 24) relié à la personne (10) à sauver et/ou à l'objet à sauver ou apte à être relié à ceux-ci comprend un élément de traction (18, 22) allongé, un élément de portance (24), des moyens pour libérer l'élément de portance, des moyens pour déterminer des données de position et des moyens pour émettre des données de position (26), et dans lequel le dispositif de sauvetage (28, 30, 31, 32, 34, 36, 38) est relié au harnais de sauvetage (14, 16, 18, 20, 22, 24) ou apte à être relié à celui-ci et comprend des moyens (34) pour haler l'élément de traction (18, 22) du harnais de sauvetage (14, 16, 18, 20, 22, 24),
**caractérisé en ce que**
le moyen pour libérer l'élément de portance (24) peut être activé par des signaux transmissibles sans fil.

8. Système selon la revendication 7,
**caractérisé en ce que**
le moyen (26) pour émettre des données de position peut être activé par des signaux transmissibles sans fil.

9. Système selon la revendication 7 ou 8,
**caractérisé en ce que**
le harnais de sauvetage (14, 16, 18, 20, 22, 24) comprend un premier élément de traction (18) allongé relié à un second élément de traction (22) allongé, le second élément de traction (22) allongé étant relié à l'élément de portance (24) et ayant un poids inférieur au poids du premier élément de traction (18) allongé.

10. Système selon l'une des revendications 7 à 9,
**caractérisé en ce que**
le harnais de sauvetage (14, 16, 18, 20, 22, 24) comprend un élément de liaison (20) disposé entre le premier élément de traction (18) et le second élément de traction (22) pour relier le harnais de sauvetage (14, 16, 18, 20, 22, 24) au dispositif de sauvetage (28, 30, 31, 32, 34, 36, 38), et que le dispositif de sauvetage (28, 30, 31, 32, 34, 36, 38) comprend une pluralité d'éléments de liaison (30) pour relier le dispositif de sauvetage (28, 30, 31, 32, 34, 36, 38) au harnais de sauvetage (14, 16, 18, 20, 22, 24).

11. Système selon l'une des revendications 7 à 10,
**caractérisé en ce que**
le moyen pour libérer l'élément de portance (24) comprend un récepteur de signaux transmissibles sans fil, un traitement de signaux et un déclencheur pour libérer l'élément de portance (24), le déclencheur étant relié à l'élément de portance (24).

12. Système selon l'une des revendications 10 ou 11,
**caractérisé en ce que**
l'élément de liaison (30) du dispositif de sauvetage (28, 30, 31, 32, 34, 36, 38) est apte à s'engrener ou à s'encliqueter dans l'élément de liaison (20) du harnais de sauvetage (14, 16, 18, 20, 22, 24).

13. Système selon la revendication 12,
**caractérisé en ce que**
l'élément de liaison (20) du harnais de sauvetage (14, 16, 18, 20, 22, 24) est une extrémité épaissie et que l'élément de liaison (30) du dispositif de sauvetage (28, 30, 31, 32, 34, 36, 38) est une contre-pièce dont les dimensions correspondent aux dimensions de l'élément de liaison (20) du harnais de sauvetage (14, 16, 18, 20, 22, 24) pour recevoir l'élément de liaison (20).

14. Système selon l'une des revendications 7 à 13,
**caractérisé en ce que**
le dispositif de sauvetage (28, 30, 31, 32, 34, 36, 38) comprend un cantilever (32) au moyen duquel au moins l'un des éléments de liaison (30) est guidé, et que le dispositif de sauvetage (28, 30, 31, 32, 34, 36, 38) comprend un autre élément de traction (31) allongé au moyen duquel l'élément de liaison (30) est tenu, des contrepoids (36) pouvant être disposés sur le cantilever (32) pour équilibrer la charge (10) à sauver.
